# EUROPEAN PATENT APPLICATION

(11) **EP 1 189 087 A2**
(43) Date of publication of application: **20.03.2002**
(21) Application number: 01117690.6
(22) Date of filing: 26.07.2001
(51) Int. Cl.: G02B 6/42

(54) **A monolithic photonic receiver with self aligned fiber holder suitable for flip chip assembly**

(30) Priority: 01.09.2000 US 654604
(71) Applicant: TRW Inc., Redondo Beach, California 90278 (US)
(72) Inventor: Tran, Dean, Westminster, CA 92683 (US); Hirschberg, Alan M., Thousand Oaks, CA 91362 (US); Rochin, Luis M., El Dorado Hills, CA 95762 (US); Strijek, Ronald L., Gilroy, CA 95020 (US); Anderson, Eric R., Redondo Beach, CA 90278 (US); Rezek, Edward A., Torrance, CA 90505 (US)
(74) Representative: Schmidt, Steffen J., Dipl.-Ing.

(57) **Abstract**

A monolithic photonic receiver device (10) provides an optoelectronic device (14) grown on a front side (16) of a chip (12), a reflective mirror (18) anisotropically etched in a first crystal plane of the chip on a back side (22) opposite the chip front side (16) and a channel anisotropically etched in a second crystal plane on the chip back side such the channel intersects a plane of the etched reflective mirror. Optical coupling between an optical device (30) and the optoelectronic device (14) is accomplished when an optical signal transmitted by the optical device travels along the channel, reflects at the etched surface of the reflective mirror and arrives incident at an active region of the optoelectronic device (14).

## Description

### BACKGROUND OF THE INVENTION

### 1. Field of the Invention

The present invention relates to a monolithically integrated photonic receiver device suitable for flip-chip bonding and a method for producing the same.

### 2. Description of the Prior Art

Presently, a variety of techniques are used to obtain efficient coupling between optoelectronic devices and optical devices. For example some optical coupling systems include fibers secured in fiber ferrules that are attached to the side walls of flat packages and microlens that are monolithically fabricated on a photodiode chip where the photodiode chip is flip-chip bonded to the flat package. The publication "Packaging Technology for a 10-Gb/a Photoreceiver Module", by Oikawa et al., Journal of Lightwave Technology Vol. 12 No. 2 pp.343-352, February 1994 discloses such a system. In the Oikawa publication an optical signal enters the fiber horizontally and is reflected vertically at the fiber's edge to a photosensitive area of the photodiode chip. Because the fiber is held exclusively by the fiber ferrule suspended above the photodiode chip, misalignment between the fiber and the photodiode chip can occur as a result of mechanical stress to the fiber ferrule or thermal fluctuations of the entire system. As a result, unique structural tolerances are required to maintain alignment between the fiber and the photodiode chip resulting in increased manufacturing costs.

Other optical coupling systems, for example U.S. Patent Nos. 5,696,862 and 5,764,832, include transmission optical fibers secured in depressions or grooves anisotropically etched in carrier chips and photodiode elements that are externally mounted to the side walls of the carrier chips such that a light bundle from the transmission fiber impinges on a side face of the etched depression and is refracted into the carrier substrate at angles that allow the light bundle to exit at the receiving photodiode element mounted at a side wall of the carrier chip. U.S. Patent No. 5,883,988 discloses a similar optical module that includes an optical waveguide mounted on a support substrate and a photoreception device substrate that is mounted directly on the support substrate using solder bumps. An oblique surface is formed on a part of the device substrate such that the oblique surface causes the deflection of an optical beam transmitted from the optical waveguide and incident thereto, to deflect to the photodetection region of the photoreception device chip. By externally mounting photodiode elements and/or waveguides to carrier chips as disclosed by the methods previously described, misalignment between the fiber and the photodiode chip can occur as a result of thermal fluctuation or mechanical stress to the carrier substrate and/or external photodiode.

In many other systems, external lenses are used to couple optical energy between optical fibers or waveguides and optoelectronic devices. For example, U.S. Patent No. 5,600,741 discloses, a carrier substrate and a photodiode mounted at an upper side of the carrier chip. A beam of light emerging from a fiber that has been inserted in an etched cavity of the carrier chip, is deflected obliquely upwards at an angle of 6.8° to the substrate normal after refraction at an etched surface of the chip. On the substrate upper side, the beam is incident on an anisotropically etched cavity or depression having a level base surface, into which an external hemispherical lens is inserted and fixed. The hemispherical lens focuses the light beam into the active region of the photodiode. And, using such external microlens makes optical coupling complex and in most cases unreliable for reasons including alignment and structural stability.

Conventional optical coupling techniques use many components, require complicated assembly processes, and are not compact. In addition, conventional optical coupling system components are typically made of different materials that have different thermal expansion coefficients. These differences can cause optical misalignment during temperature changes, which are common in many military and space applications. Furthermore, when using discrete bulk optical components, the complexity of the assembly process is increased because there are more individual components to align. The greater the complexity, the more assembly costs are increased and reliability is decreased.

What is needed, therefore, is a method for improving system yield and reliability in microelectronic assemblies by forming a monolithically integrated photonic receiver device for coupling optical signals between a fiber or waveguide and an optoelectronic device, thereby alleviating the number and complexity of hybrid integrated components. The disclosed method produces a low loss, economical system and, because of its minimal bulk, creates a device that is more suitable for assembly with standard microwave packages.

### SUMMARY OF THE INVENTION

It is an aspect of the present invention to provide a photonic receiver device formed from a chip having an optoelectronic device grown on a front side of the chip and a reflective mirror and a channel formed on a back side of the wafer opposite the chip front side. The reflective mirror is etched on the chip back-side in a first crystal plane of the chip such that the reflective mirror is selectively aligned opposite the optoelectronic device formed on the chip front side. The channel is etched on the chip back-side in a second crystal plane of the chip such that the channel intersects the chip first crystal plane.

It is also an aspect of the present invention to provide a method for producing a photonic receiver device. The method comprises the steps of providing a chip having a front side, a back-side opposite the front side, a first crystal plane and a second crystal plane. An optoelectronic device is formed on the front side of the chip. And, by etching the chip back-side along the first crystal plane, a reflective mirror is formed. Next, by etching the chip back-side along the second crystal plane a channel is formed that intersects the reflective mirror. Finally, a surface of the reflective mirror is coated with a metal mirror material.

In another aspect, the present invention provides a packaged photonic receiver module having a package, a chip carrier attached to a flat base of the package, a photonic receiver device mounted to a surface of the chip carrier such that a fiber channel contained within the photonic receiver device is exposed and an optoelectronic receiver structure also contained within the photonice receiver device is located proximal to the chip carrier surface, means for emitting an optical signal and a package cover. The package includes a plurality of side walls attached to the flat base, an opening opposite the flat base and a tubular casing attached at one of the side walls such that the tubular casing horizontally extends through the side wall. The photonic receiver device, in addition to including a fiber channel and an optoelectronic receiver structure, includes a chip having a front side where the optoelectronic receiver structure is grown. The photonic receiver device includes a reflective mirror etched in a first crystal plane of the chip on a back-side of the chip opposite the chip front side. The photonic receiver device includes a second crystal plane, wherein the channel is etched in the second crystal plane of the chip on the chip back side and the channel intersects the chip first crystal plane. The means for transmitting an optical signal is included such that the optical signal enters the photonic receiver device chip channel through the package tubular casing and the signal reflects at the reflective mirror to arrive incident at the optoelectronic device of the photonic receiver.

### BRIEF DESCRIPTION OF THE DRAWINGS

Reference is now made to the following specification and attached drawings, wherein:
FIG. 1 is a side cross-sectional illustration of a monolithic photonic receiver device in accordance with the present invention;
FIG. 2 is a side cross-sectional illustration of a packaged photonic receiver module in accordance with the present invention;
FIGs. 3A-3P illustrate, in cross-sectional view, the steps for fabrication of the monolithic photonic receiver device in accordance with the present invention;
FIG. 4 is a cross-sectional illustration of the monolithic photonic receiver device of the present invention having rod interconnects suitable for flip-chip mounting;
FIG. 5A is a top view illustration of multiple photonic receiver devices contained on a scribed chip;
FIG. 5B is a bottom view illustration of multiple photonic receiver devices contained on a scribed chip;
FIG. 5C is a side cross-sectional illustration of a monolithic photonic receiver device illustrated in FIGs. 5A and 5B;
FIG. 5D is a top view illustration of the monolithic photonic receiver device illustrated in FIG. 5C;
FIG. 6A is a top view illustration of a chip carrier including multiple rod receptor structures;
FIG. 6B is a side cross-sectional illustration of a rod receptor structure illustrated in FIG. 6A;
FIG. 7 is a top view illustration of the scribed chip illustrated in FIG. 5A mounted to the chip carrier illustrated in FIG. 6A;
FIG. 8A is a side cross-sectional illustration of a conventional photonics package housing;
FIG. 8B is a top view illustration of the conventional photonics package housing illustrated in FIG. 8A;
FIG. 9A is a side cross-sectional illustration of a packaged photonic receiver module including a monolithic photonics receiver device and chip carrier mounted to a flat base of the conventional photonics package housing illustrated in FIGs. 8A and 8B;
FIG. 9B is a top view illustration of the packaged photonic receiver module illustrated in FIG. 9A; and
FIG. 10 is a side cross-sectional illustration of the packaged photonic receiver module illustrated in FIG. 9A including a package cover and fiber pigtailing.

### DETAILED DESCRIPTION OF THE INVENTION

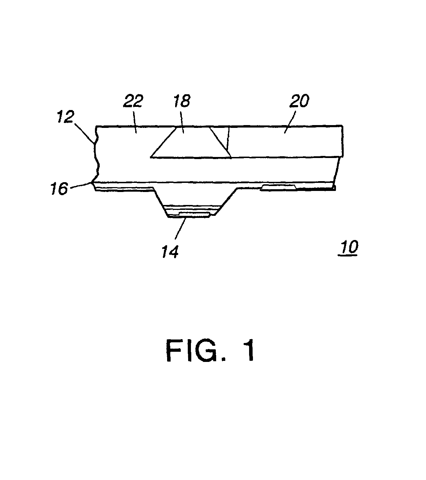

Referring to FIG. 1, a photonic receiver device 10 in accordance with the present invention is disclosed. The photonic receiver device 10 includes a chip 12, an optoelectronic receiver structure 14 formed on a front side 16 of the chip 12, an anisotropically etched reflective mirror 18 and an anisotropically etched channel 20, both formed on a back side 22 of the chip 12 opposite the receiver structure 14. The optoelectronic receiver structure 14, the reflective mirror 18 and the channel 20 are monolithically integrated to form the photonic receiver device 10 such that the device 10 can passively and accurately align optical fibers and redirect and focus optical energy from an optical fiber to the optoelectronic receiver structure 14. And, because of its low bulk, the photonic receiver device 10 is particularly suitable for assembly within conventional photonics packages.

The chip 12 may be formed from III-V semiconductor materials having impurity doped semi-insulating properties, such as semi-insulating indium phosphide (InP), semi-insulating indium arsenide (InAs), semi-insulating gallium phosphide (GaP), or semi-insulating gallium arsenide (GaAs). Preferably, the impurity doping materials used in these III-V semiconductor compounds include, but are not limited to, iron (Fe) or cobalt (Co). The unique crystal plane properties of III-V semiconductor material allow for the preferential etching of the reflective mirror 18 (described below) in one crystal plane of the chip 12 and the etching of the intersecting channel 20 (described below) on an opposite crystal plane of the chip 12 to produce increased optical signal coupling efficiency, mechanical reliability and decreased assembly complexity and costs.

The optoelectronic receiver structure 14, preferably a photodetector device, is formed on the front side 16 of the chip 12 using the epitaxial crystal growth, photolighography and etching techniques later described herein. The structure 14 is preferably a very large scale integration (VLSI) device that may include conventional optoelectronic MMIC device structures 80.

The reflective mirror 18 contains a flat reflective surface having a natural crystal plane angle of from approximately 36 to 53 degrees preferably etched in a (111) crystal plane of the chip 12. The reflective mirror 18 is formed in alignment opposite the photoreceiver structure 14 and is used for redirecting and focusing the diverging output of optical energy from an optical fiber (not shown) towards the active region of the photoreceiver structure 14. Alternatively, the reflective mirror 18 may contain a parabolically-shaped curved reflective surface also etched in the (111) crystal plane of the chip 12. The present invention focuses on the etching of (111) crystal planes to form flat or curved reflective surfaces so that by using the controlled etching techniques later referenced herein, low cost and high quality reflective surfaces can be produced having optimal atomic layer smoothness.

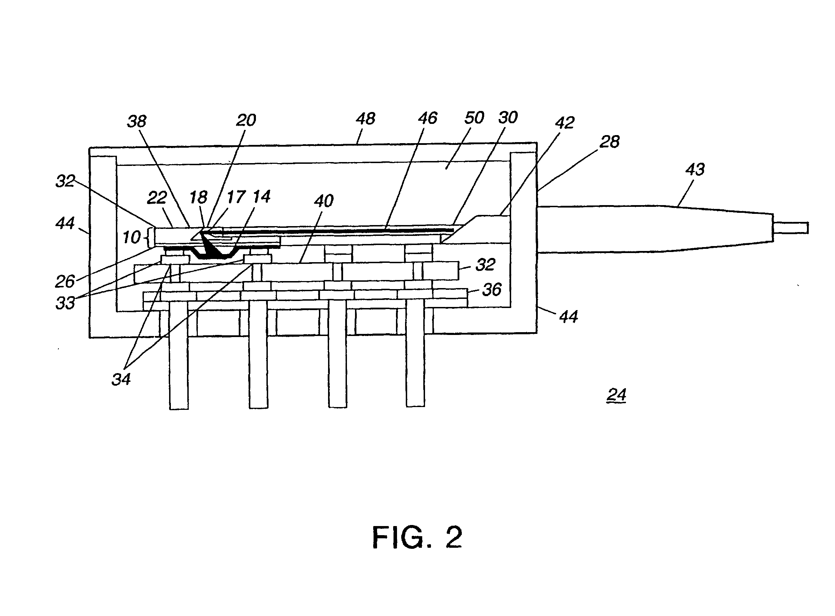

The etched channel 20 is formed on a (001) crystal plane of the chip 12 in an orthogonal direction such that the end of the channel 20 intersects the plane of the reflective mirror 18. The channel 20 provides a natural groove for precise optical fiber positioning such that optical energy transmitted from an optical fiber is redirected at the etched surface of the reflective mirror 18 for collection at an active region of the photoreceiver structure 14. The channel 20 is preferably formed having a semi-circular or u-shape profile, but may also be formed having a v-shaped profile. However, the semi-circular shape of the channel 20, when compared to equivalent v-shaped structures, is preferred because it allows more surface area contact between the channel 20 and round optical fibers and, as a result, increases the stability of the packaged photonics receiver module 24 (see FIG. 2) during periods of thermal variation and mechanical stress.

Referring to FIG. 2, a packaged photonics receiver module 24 is illustrated including a monolithically integrated photonic receiver device 10 as taught by the present invention, a chip carrier 32, a conventional photonics package 28 and an optical fiber 30. The device or multiple devices 10 may be scribed to form a chip 38. The chip 38 is mounted to the chip carrier 32 and assembled with the optical fiber 30 into a standard metal or plastic device package 28, for example a dual in-line, ball grid array (BGA) or surface mount technique (SMT) device package. The chip carrier 32 may be a standard chip carrier containing passive circuitry such as matching network circuitry. Using thermal compression flip-chip bonding rod 33 and rod receptor structures 34, later described herein, the chip 38 containing the photonic receiver device(s) 10 is mounted to a surface 40 of the chip carrier 32 such that the photoreceiver structure 14 is adjacent to the chip carrier surface 40. The rods 33 formed on the chip front side 16 each have an outer circumferential wall that comes into contact with one corresponding rod receptor 34 formed on the chip carrier 32. Each rod 33 is preferably formed from a material that is electrically conductive and compliant to thermally induced stresses, such as soft gold (Au). When the rod 33 and corresponding receptor 34 are aligned and brought together while applying heat and force, the rod 33 deforms and interlocks with its complementary receptor 34.

The assembly that includes the photonic receiver device 10 and the chip carrier 32 is secured to a flat base 36 of the device package 28 using conventional techniques such as gold-tin (Au/Sn) alloyed solder so that the photonice receiver device back side 22 containing the fiber channel 20 is exposed. The flat base 36 may include a plurality of discrete electronic components and a plurality of interconnecting conductors attached thereto. The package 28 includes a generally tubular casing 42 attached to a package side wall 44 such that the tubular casing 42 extends horizontally through the side wall 44 into the package 28 to facilitate a conventional fiber pigtailing configuration. An optical fiber 30, preferably a lensed or butt fiber, is inserted through the tubular casing 42 at the side wall 44 and secured within the etched fiber channel 20 of the photonic receiver device 10 using techniques that include Au/Sn eutectic solder. Alternatively, an extrusion portion (not shown) of the tubular casing 42 may be molded outside the wall 44 with flexible polypropylene rubber protect the fiber pigtail from being broken or otherwise disturbed.

Because of the monolithic integration of the photonic receiver device 10, the optical fiber's 30 position within the fiber channel 20 allows it to passively assume an accurate optical alignment with the reflective mirror 18 and the photoreceiver structure 14 for efficient optical coupling of optical signals 17 transmitted from the fiber 30 and reflected at the mirror 18 to the photoreceiver structure 14. And, since the reflective mirror 18, the fiber channel 20 and the photoreceiver structure 14 are monolithically integrated from the same chip 12, optical misalignment between the optical fiber 30 and the photoreceiver structure 14 due to thermal fluctuations or mechanical stress is significantly reduced. A cover 48 is included for enclosing the package 28. The cover 48 is secured to the package side walls 44 at an opening 50 of the package 28 using conventional seam sealer or laser welder techniques suitable for use with metal device packages or plastic molding techniques suitable for use with plastic device packages.

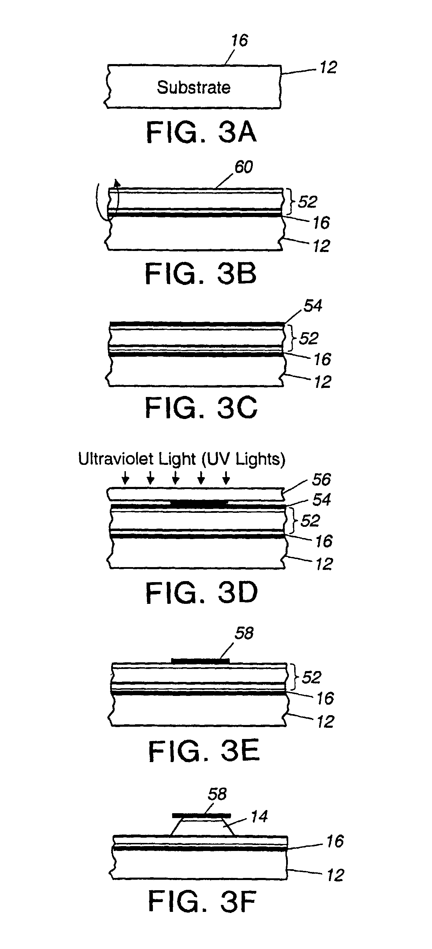

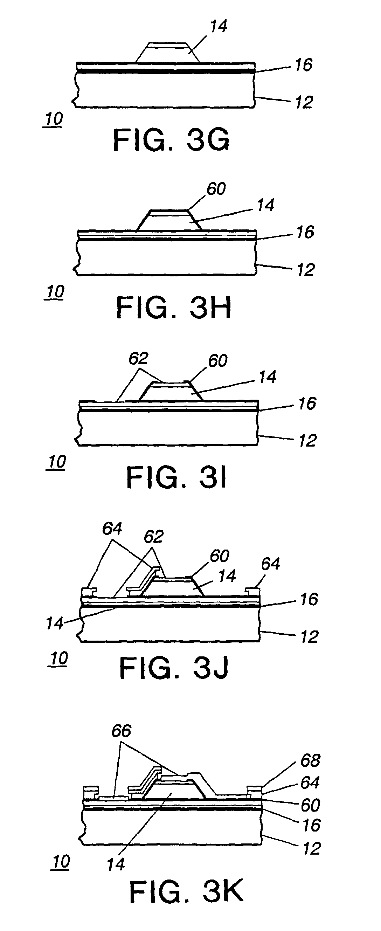

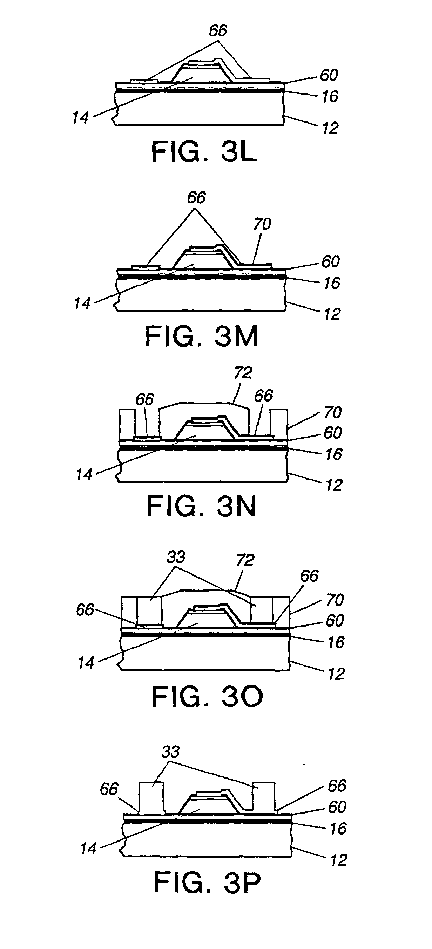

Referring to FIG. 3A, a method for producing the photonic receiver device 10 is described beginning with the fabrication of the photoreceiver structure 14 on the front side 16 of a chip 12. Fabrication of the photoreceiver structure 14 begins by preparing a semi-insulating semiconductor chip 12. The preferred chip material is semi-insulating indium phosphide (InP), chosen for its III-V crystal characteristics. However, the chip material may also be chosen from other semi-insulating III-V semiconductor materials including semi-insulating gallium arsenide (GaAs), semi-insulating gallium phosphide (GaP), semi-insulating indium arsenide (InAs), and semi-insulating indium phophide (InP).

The chip 12 is first prepared on the front side surface 16 by a standard cleaning process that may include using 1-1-1 trichloroethylene (TCE), acetone (ACE), isopropanol (IPA), deionized water (DI) and potassium hydroxide (KOH) for indium-based chip materials or using hydrochloric acid (HCl) for gallium-based chip materials. An alternative cleaning method for indium-based chip materials includes etching the front surface 16 of the chip 12 in a mixture of chromic acid and sulfuric acid followed by a deionized water (DI) rinse, a KOH soak, and finally a second DI rinse. Following the cleaning process, and before forming the active layers of the photoreceiver structure 14 by epitaxial crystal growth processes, the semiconductor chip 12 is rinsed in deionized water (DI) and then etched in a sulfuric acid:hydorperoxid:deionized water solution for approximately five to ten minutes, followed by a rinse in deionized water (DI) for approximately fifteen to thirty minutes. This etch removes the oxides and defect lattices from the chip 12 and the DI rinse removes the etchants from the chip 12.

Referring to FIG. 3B, active layers 52 of the photoreceiver device structure 14 can be formed on the chip front side 16 using conventional epitaxial crystal growth processes. It is important to note that the device layer growth process required here is not limited to any particular process and can include molecular-electron beam epitaxial (MBE) crystal growth processes, metal organic chemical vapor deposition (MOCVD), liquid phase epitaxial crystal growth (LPE) processes, or other similarly suitable crystal growth processes.

Referring to FIG. 3C, the remaining steps of the photoreceiver structure 14 fabrication process include photolighography and etching steps. Typically, very large scale integration (VSLI) device fabrication processes, like the device fabrication process described here, consist of approximately twenty to one-hundred repetitions of the photolithography and etching processing steps, however, for purposes of illustrating the present invention, such repetitions are not described.

Referring still to FIG. 3C, the photolithography step includes coating a layer of photoresist material 54 over the epitaxially grown device layers 52 and soft baking the photoresist 54 at a temperature of from 90°C to 100°C for a period of approximately 45 minutes to provide a desired curvature in the photoresist material.

Referring to FIG. 3D, a pattern mask 56 is aligned over the layer of photoresist material 54 and, using UV exposure, the mask pattern 56 is transferred to the photoresist layer 54. The transferred pattern, as shown in FIG. 3E, is developed and the photoresist residue is removed using an oxygen plasma descum gas mixture, leaving a photoresist mask 58 on the epilayers 52 located at the chip front surface 16. The photoresist mask 58 enables the photoreceiver structure 14 to be formed into a mesa-like structure during subsequent etching steps

Referring to FIG. 3F, the epitaxially grown layers 52 formed on the chip surface 16 are preferentially etched in those areas not protected by the photoresist mask 58 to form the mesa-shaped photoreceiver device structure 14. Preferably, the epitaxially grown layers 52 on the chip 12 are wet-chemical etched using a suitable etchant such as a phosphoric acid:deionized water (H₃PO₄: H₂O) solution, phosphoric acid:hydrogen peroxide (H₃PO₄:H₂O₂:H₂0), succinic acid (H₂0₂:H₂0) or similar acid or alkaline based solutions, depending on the material composition of the device structure 14. Alternatively, the epilayers 52 may be dry etched using standard dry etch methods that may include electron cyclotron resonance etching (ECR) or reactive ion etching (RIE). Next, as illustrated in FIG. 3G, any remaining photoresist material is removed from the epilayers 52 using an acetone solution, a photoresist stripper solution or a similarly compatible solution thereby exposing the mesa-like structure of the photoreceiver structure 14.

As shown in FIGs. 3H-3N, to facilitate packaging the photonic receiver device 10, passivation and metallization steps are performed on the front side 16 of the chip 12. A "passivation" layer of a dielectric material is conventionally provided over the underlying device layers comprising integrated circuit structures. The passivation layer functions as an insulation layer and acts to protect the underlying structure from moisture and ion contamination that can damage or destroy the structure by causing corrosion and electrical shorts.

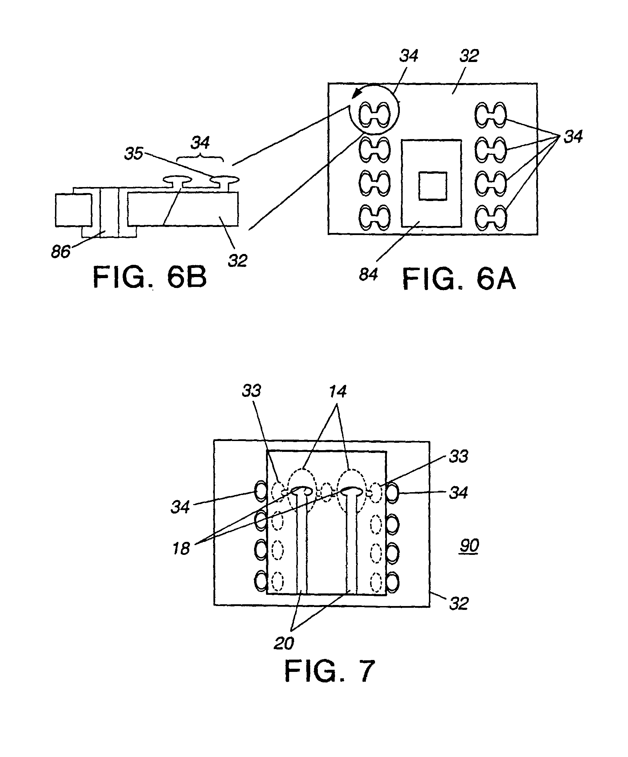

The chip 12 is metallized to form electrical contacts and to form rod-shaped interconnections as taught by the Tran et al. cross-referenced patent application, "Apparatus and Method for Snap-On Thermo-Compression Bonding." Each rod (see numerals 33, FIG. 3P) is formed on the chip front side 16 having an outer circumferential wall that comes into contact with a corresponding rod receptor (see numerals 34, FIG. 6) formed on a chip carrier (see numeral 32, FIG. 6). The rod 33 is preferably formed from a material that is electrically conductive and compliant to thermally induced stresses, such as soft gold (Au). When the rod 33 and complementary receptor 34 are aligned and brought together, the rod 33 deforms and interlocks with its complementary receptor 34. The attachment process occurs while applying heat and pressure (thermal compression), thereby forming a strong interlocking bond.

Referring to FIG. 3H, the passivation step includes depositing a dielectric film 60 over the device structure 14 and the chip front surface 16. The preferred dielectric film material is silicon nitride and it may be deposited using chemical vapor deposition (CVD), electron beam (E-beam) deposition or a similar sputtering deposition method. Alternatively, the dielectric film material may include thin film dielectric materials such as silicon dioxide, silicon nitride, stacked silicon nitride or silicon dioxide layers, or other dielectric materials similarly impervious to moisture and other contaminants. In addition to the sputtering methods previously mentioned, the dielectric film deposition may also be accomplished by glass or polyimide spin-on methods. However, it is important to note that spin-methods are generally not as reliable as the deposition methods previously described.

Referring to FIG. 3I, window regions 62 are created in the dielectric film layer 60 to facilitate the formation of electrical contact regions during subsequent metallization steps. These window regions 62 are created using photolithography and the dry etch techniques. The particular dry etch technique chosen here depends on the dielectric film material used during passivation. For example, RF plasma etch, DC plasma etch, reactive ion etch (RIE), electron cyclotron resonance radio frequency ion etch (ECR), and laser induced etch (LIE) are each etching techniques that can be used in combination with freon 14 (CF₄) or freon 22 (H₂FC-CH₂F) gases to etch silicon dioxide, silicon nitride, or similar dielectric thin film materials.

Referring to FIG. 3J, the metallization of the chip front side 16 begins by using photolithography steps to create a mask pattern for forming the electrical contact regions 66 (see FIG. 3K). The preferred photolithography method includes coating a thick layer of photoresist of from approximately two to six microns on the chip front side surface 16. Following a soft bake of the photoresist layer and prior to mask alignment, the photoresist layer is soaked in a chlorobenzen solution followed by UV exposure and a subsequent baking is applied to form a mask 64. It is important to note that this step does not require a particular photolithography technique and alternative methods such as double photoresist coating can be used.

Referring to FIG. 3K, a metal deposition process is performed on the chip front side 16 using an e-beam or similar evaporation technique to form the electrical contact regions 66. In particular, a metal compound 68 that is metallurgically compatible with the top most semiconductor layer of the photoreceiver structure 14 is evaporated over the chip front side 16. The metal compound 68 is preferably a 400:1000:2000 angstrom thick contact metal compound such as Ti/Pt/Au, alloyed AuGe:Ni:Au or some similarly compatible metal compound, depending on the polarity of the contacts 66.

Referring to FIG. 3L, lift-off of the photoresist mask 64 is performed by coating the chip front side 16 with an acetone spray or by soaking the surface 16 in a warm acetone solution for approximately ten minutes to two hours, or until all of the photoresist is lifted-off. The acetone acts to dissolve the photoresist mask material 64, leaving behind the electrical contact regions 66. Following the acetone treatment, the chip 12 is cleaned using an isopropanol (IPA) and deionized water (DI) solution. Referring to FIG. 3M, a thin film of aluminum 70 having a thickness of from approximately 1000 angstroms to 2000 angstroms is coated over the entire front side chip surface 16. The aluminum thin film 70 forms an electrically conductive layer used in the plating process described below.

Referring to FIG. 3N, the formation of the rod contacts 33 (see FIG. 3P) on the chip front side 16 begins by using photolithography steps to create a mask corresponding to the desired structure of the rod contacts 33. A layer of photoresist 72, having a thickness greater than the height of the mesa-shaped photoreceiver device structure 14, approximately 10 to 15 microns, is coated over the front surface 16 of the chip 12. As illustrated in FIG. 30, a gold (Au) layer 74 is plated over the chip front side 16 at a thickness of from approximately five to nine microns higher than the mesa 14, thereby forming rod contacts 33. And, as shown in FIG. 3P, the photoresist layer 72 and the aluminum film 70 located beneath the photoresist 72 are removed from the chip front side 16 at once using conventional photoresist developer.

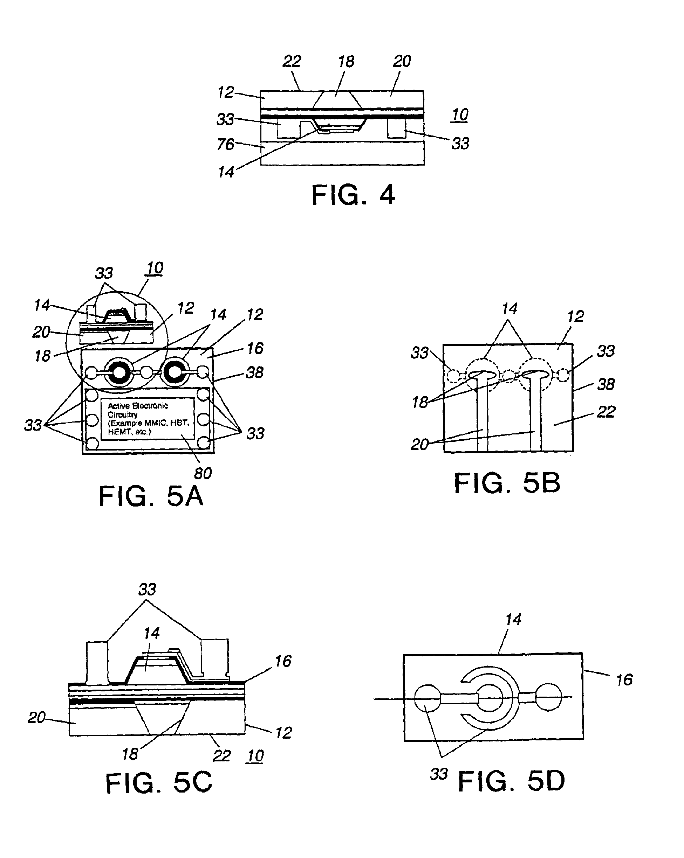

Referring to FIG. 4, the chip 12 is turned over to exposing the back-side 22 of the chip 12 and the chip 12 is mounted to a wafer carrier 76. As described in the Dean et al. cross-referenced application, "Optical Integrated Circuit Microbench System," a reflective mirror 18 and interacting channel 20 are formed on the chip back side 22. The chip 12 is demounted from the wafer carrier 76, cleaned using an isopropanol (IPA), trichloroethylene, or acetone solution, rinsed in a deionized water solution, and blown dry. The mirror surface 18 is then vapor coated with a metal, preferrably Ti:Au, Ti:Ag or Al:Ag:Au, by slant mounting the chip 12 so that the reflective mirror 18 is exposed to the metal vapor, thus forming the mirror 18. Finally, the chip 12 is again lifted off the wafer carrier 76 and cleaned using techniques previously described.

Referring to FIG. 5, the chip 12 may be cut using a diamond scribe process or similar process to form a chip 38 containing active electronic circuitry 80 such as MMIC, HBT or HEMT circuitry and one or many monolithic photoreceiver devices 10. In particular, FIG. 5A shows a top view illustration of such a chip 38 containing multiple devices 10. FIG. 5B shows a bottom view illustration of the chip 38 illustrated n FIG. 5A, and FIGs. 5C and 5D respectively show exploded cross section and top view illustrations of a monolithic receiver device 10 contained in the chip 38.

Referring to FIG. 6, a standard chip carrier 32 containing passive circuitry 84, such as matching network circuitry and via-hole interconnections 86, is provided having a plurality of rod receptors 34 formed on a surface of the chip carrier 32 as taught by the Tran et al. patent application, "Apparatus and Method for Snap-On Thermo-Compression Bonding," referenced herein. Each rod receptor 34 is generally cylindrically shaped with a hollow middle portion that when plated on the chip carrier 32 forms a centrally disposed well for receiving a rod 33 (not shown). A lip portion 35 is formed on an end or mouth of the rod receptor 34 for interlocking engagement with the rod 33. The rod receptor 34 is preferably manufactured from a material that is conductive and compliant to thermally induced stresses, such as soft gold (Au).

Referring to FIG. 7, the chip 38 is flip-chip bonded to the chip carrier 32 to form a submodule 90, wherein each rod 33 is axially aligned with a corresponding rod receptor 34 and brought into contact with the rod receptor 34. The rod 33 and the rod receptor 34 are then pushed or snapped together, causing the rod 33 to deform and interlock with the rod receptor 34. As the rod 33 is further positioned within the rod receptor 34, the end of the rod 33 engages the well portion of the rod receptor 34 housing, causing the outside wall of the rod 33 to spread out and curl under the lip portion of the rod receptor 34, thus securely interlocking the rod 33 into the rod receptor 34 and correspondingly the photonic receiver device device 10 to the chip carrier 32. This connection process, preferably a thermo-compression bonding process, occurs while applying heat and force, thereby producing a strong interlocking bond.

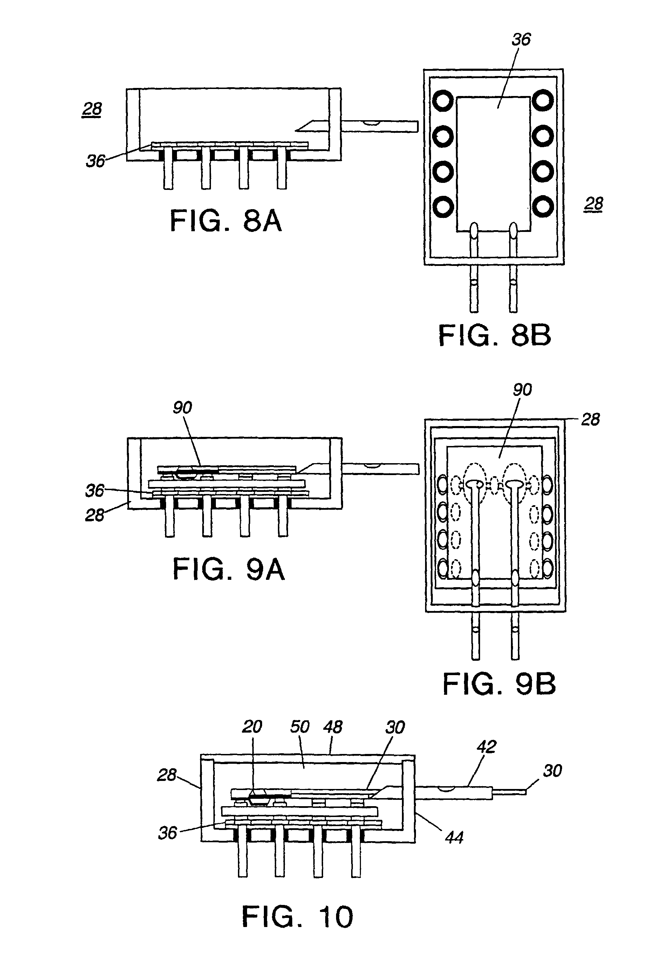

Referring to FIGs. 8 and 9, the submodule 90 is packaged into a universal (standard) metal or plastic package 28 such as a dual in-line, ball grid array (BGA) or surface mount technique (SMT) package. The submodule 90, as shown in FIG. 9, is secured to a base 36 of the package housing using a gold-tin (Au/Sn) eutectic solder or similar technique.

And, as shown in FIG. 10, an optical fiber 30 is positioned in the fiber channel 20 of the submodule 90 by extending the fiber 30 through a tubular casing 42 mounted at a side wall 44 of the package 28. The optical fiber 30 is secured in the fiber channel 20 using fiber assembly techniques such as hermetic Au/Sn eutectic solder or epoxy attachment. Depending on whether the package 28 is formed from a plastic or metal material, a package cover 48 is sealed in an opening 50 of the package 28 using seam sealer, laser welder or plastic molding.

In accordance with the advantages of the present invention, the monolithic photonic receiver device technology previously described can be applied to all electronic devices used for space, avionics and commercial applications that may use amplifiers, receivers and transmitter devices. Using automatic processing manufacturing approaches, arrays of photonic receiver devices can be fabricated and flip-chip attached to devices to produce highly reliable and low-cost electro-optic assemblies.

Obviously, many modifications and variations of the present invention are possible in light of the above teachings. Thus, it is to be understood that, within the scope of the appended claims, the invention may be practiced otherwise than as specifically described above.

## Claims

1. A photonic receiver device, comprising:
a chip having a front side, a back side opposite said front side, a first crystal plane, and a second crystal plane;
an optoelectronic device on said chip front side;
a reflective mirror on said chip back side in said first crystal plane aligned opposite said optoelectronic device; and
a channel on said chip back side in said second crystal plane intersecting said first crystal plane.

2. A photonic receiver device as recited in claim **1**, wherein said chip is a III-V semiconductor material selected from the group consisting of gallium arsenide (GaAs), gallium phosphide (GaP), indium arsenide (InAs), and indium phosphide (InP).

3. A photonic receiver device as recited in claim **1**, wherein said reflective mirror has a flat reflective surface.

4. A photonic receiver device as recited in claim **3**, wherein said flat reflective surface has a crystal plane angle of approximately 36 to 53 degrees.

5. A photonic receiver device as recited in claim **1**, wherein said reflective mirror has a curved reflective surface.

6. A photonic receiver device as recited in claim 5, wherein said curved reflective surface is parabolically-shaped.

7. A method for producing a photonic receiver device, said method comprising the steps of :
providing a chip having a front side, a back side opposite said front side, a first crystal plane and a second crystal plane;
forming an optoelectronic device on said chip front side;
etching said chip back side along said first crystal plane to form a reflective mirror;
etching said chip back side along said second crystal plane to form a channel such that said channel intersects said reflective mirror; and
coating a surface of said reflective mirror with a metal material.

8. The method as recited in claim 7, wherein providing said chip further comprises selecting the chip of a III-V semiconductor material selected from the group consisting of gallium arsenide (GaAs), gallium phosphide (GaP), indium arsenide (InAs), or indium phosphide (InP).

9. The method as recited in claim 7, wherein forming said optoelectronic device on said chip front side further comprises:
epitaxially growing a crystal device layer on said chip front side;
forming a photoresist mask on said crystal device layer in a pattern corresponding to a structure of said optoelectronic device;
selectively etching said chip front side to form said optoelectronic device structure; and
removing said photoresist mask from said chip front side, thereby exposing said optoelectronic device structure.

10. A packaged photonic receiver system comprising:
a package having a plurality of side walls, and a flat base attached to said plurality of side walls;
a tubular casing attached at one of said package side walls wherein said tubular casing horizontally extends through said one side wall;
a chip carrier attached to a surface of said flat base;
a chip attached to a surface of said chip carrier, said chip having a front side, a back side opposite said front side, a first crystal and a second crystal plane, wherein said chip front side is attached to said chip carrier surface;
an optoelectronic device contained on said chip front side;
a reflective mirror contained in a first crystal plane of said chip back side;
a channel contained on said chip back side in said chip second crystal plane, wherein said channel intersects said first crystal plane; and
an optical source disposed within said tubular casing, said optical source having means for transmitting an optical signal within said channel, whereby said optical signal travels along said channel and is reflected at a surface of said reflective mirror thereby arriving at said optoelectronic device.
